# FASCICULE DE BREVET EUROPEEN

(11) **EP 0 761 098 B1**
(45) Date de publication et mention de la délivrance du brevet: **11.07.2001**
(21) Numéro de dépôt: 96401808.9
(22) Date de dépôt: 22.08.1996
(51) Int. Cl.: A21D 13/00

(54) **Procédé de fabrication d'un produit alimentaire, du type pizza à forme d'étui et consommable comme un sandwich et produit obtenu**
Verfahren zur Herstellung eines mit einer Hülle versehenen Nahrungsmittelprodukts in der Art einer Pizza, das wie ein Sandwich gegessen werden kann, sowie die damit hergestellten Produkte
Method for the manufacture of a case-like food product of the pizza type edible like a sandwich and the obtained product

(30) Priorité: 07.09.1995 FR 9510482
(43) Date de publication de la demande: 12.03.1997
(73) Titulaire: Gerard Schlienger Investissements, 75004 Paris (FR)
(72) Inventeur: Rebeaud, Isabelle, 1009 Pully (CH)
(74) Mandataire: Jolly, Jean-Pierre

(56) Documents cités:
- US-A- 2 998 318
- US-A- 3 769 035
- US-A- 4 283 431
- US-A- 4 400 404

## Description

L'invention concerne un procédé de fabrication d'un produit alimentaire, du type pizza, à forme d'étui et consommable comme un sandwich et le produit obtenu.

On sait qu'une pizza ne peut-être consommée sans la nécessité d'une assiette en raison de sa taille et de sa forme ronde. De même, la division de cette pizza en parts, qu'elles soient triangulaires ou rectangulaires ne se prête pas non plus à une préhension et consommation simultanées convenables car les divers ingrédients contenus peuvent couler ou tomber.

On connaît en outre les pizzas à forme de chaussons dont les ingrédients enfermés par repliage de la pâte sont cuits à l'étouffée sous la pâte d'enveloppe repliée. Néanmoins, la cuisson des ingrédients internes n'est pas obtenue en raison de la pâte d'enveloppe supérieure qui constitue une enveloppe isolante thermique, et une cuisson satisfaisante des ingrédients conduit à surcuire la pâte d'enveloppe et à la carboniser. De plus, la cuisson à l'étouffée et incomplète des ingrédients internes diminue nettement les qualités gustatives de cette pizza. Par ailleurs, la forme sensiblement demi-circulaire et peu rigide de ce type de pizza et le fait que les ingrédients sont peu cuits et peuvent couler ne permet pas sa préhension et consommation simultanées comme un sandwich.

L'invention vise à remédier à cet inconvénient et propose un procédé de fabrication d'un produit alimentaire, du type pizza, caractérisé en ce qu'il consiste à :
- préparer une première pâte à pizza crue, destinée à former le fond de pizza, de forme sensiblement rectangulaire au format du produit à obtenir ;
- disposer de façon classique sur cette pâte de fond crue les divers ingrédients de pizza choisis, tels que sauce tomate, champignons, jambons, etc ...
- à cuire cette pâte avec ses ingrédients dans un four à pizza, sur la sole et à la chaleur ambiante de ce four, de façon classique, au moins jusqu'à un point proche de la cuisson complète,
- à revêtir la pâte de fond avec ses ingrédients ainsi cuits d'une pâte à pizza fine crue, formant enveloppe et enfermant les ingrédients de façon hermétique sur la pâte de fond , et solidarisée à cette pâte de fond par ses bords, et
- à mettre au four à nouveau l'ensemble obtenu de façon à cuire la pâte d'enveloppe.

Naturellement, le temps de cuisson de la pâte fine d'enveloppe est plus faible que le temps de cuisson de la pâte de fond garnie (en raison de sa finesse) et permet de parfaire la cuisson de l'ensemble.

Il résulte de cette disposition que l'on obtient une pizza, à forme d'étui, analogue à un sandwich et dont le format est celui de la pâte de fond, qui est fermée et présente une certaine rigidité résultant de la cuisson des pâtes assemblées, et permettant sa préhension et consommation simultanées sans nécessité d'une assiette à la manière d'un sandwich.

En outre, la cuisson est celle d'une pizza traditionnelle avec ses qualités gustatives, la pâte d'enveloppe ne fournissant que le conditionnement du produit.

De préférence, le format en surface de la pâte d'enveloppe est légèrement plus grand que celui de la pâte de fond pour permettre le recouvrement de cette dernière avec ses ingrédients par pliage de ses bords longitudinaux et latéraux sous la périphérie de la pâte de fond cuite. Cette disposition améliore l'effet d'enveloppe.

L'invention concerne également les produits alimentaires obtenus par la mise en oeuvre du procédé défini ci-dessus.

L'invention est illustrée ci-après à l'aide d'un exemple de réalisation et en référence au dessin annexé sur lequel :
- la figure 1 est une vue en perspective montrant la cuisson de la pâte de fond avec ses ingrédients, selon le procédé de l'invention,
- la figure 2 est une vue en perspective montrant la dépose de la pâte d'enveloppe sur la pâte de fond avant le pliage d'enveloppe,
- la figure 3 est une vue en coupe transversale médiane du produit cuit obtenu et
- la figure 4 est une vue en perspective de ce produit.

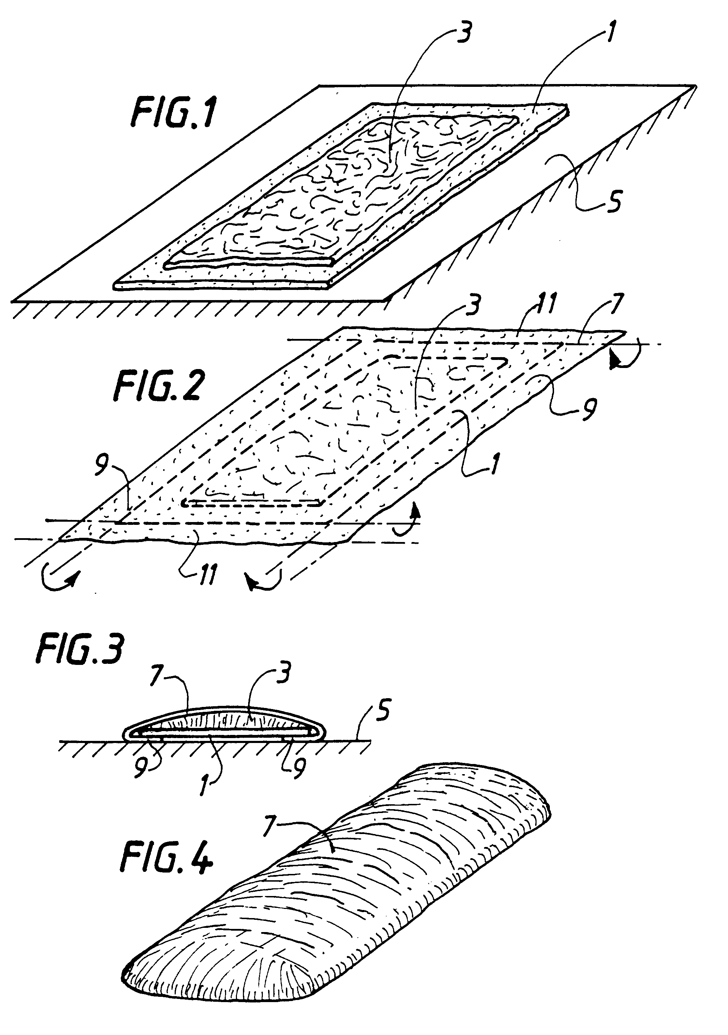

Avec référence à la figure 1, on prépare d'abord une pâte à pizza crue classique 1 que l'on étend sur une table de travail selon un format rectangulaire ou proche, par exemple de largeur d'environ 8 cm, longueur d'environ 25 cm et épaisseur d'environ 1 à 2 mm, ce format allongé correspond sensiblement à celui d'un sandwich. Il peut éventuellement être autre que rectangulaire, gardant néanmoins son caractère allongé. On dispose et répartit ensuite de façon classique les ingrédients de garniture 3, tels que nappage de sauce tomate, morceaux de champignon et de fromage, selon le choix de pizza. On glisse une pelle sous cette pâte pour la prélever et l'introduire dans un four à pizza classique, à sole et voûte réfractaires chauffées entre 250 et 300 °C et on pose la pâte 1 avec sa garniture 3 sur la sole 5. La cuisson est effectuée à la chaleur ambiante du four pour les ingrédients 3 et par le contact avec la sole 5 pour la pâte de fond 1, de façon classique comme pour une pizza traditionnelle à une durée d'environ 60 secondes.

Ensuite, on sort du four l'ensemble de pâte de fond 1 et garniture 3 cuits et on le dispose à nouveau sur la table de travail.

Une pâte à pizza crue d'enveloppe 7 est à présent confectionnée sur la table de travail pour s'étendre sur un format sensiblement rectangulaire légèrement supérieur à la pâte de fond 1, à savoir par exemple d'environ 10 cm de largeur, 27 cm de longueur et environ 1 mm d'épaisseur ou moins. On prélève manuellement cette pâte 7 pour la déposer de façon centrée sur l'ensemble de pâte 1 et garniture 3 cuits (figure 2). Il suffit de rabattre par pliage les bords de cette pâte sous la pâte de fond qui est rigide, c'est-à-dire les deux bords longitudinaux 9 puis les deux autres bords 11 des côtés de largeur sous la périphérie de la pâte de fond 1, à la forme d'un porte-feuilles. L'ensemble est alors hermétiquement fermé.

On prélève de nouveau cet ensemble avec la pelle de four pour l'introduire dans le four à pizza en vue de la cuisson de la pâte d'enveloppe 7. La cuisson est effectuée dans un temps correspondant à la cuisson de la pâte d'enveloppe fine, environ 30 secondes. On notera que les plis d'enveloppe 9, 11 isolent la pâte de fond cuite 1 (rigide) du contact avec la sole 5 du four (figure 3), de l'épaisseur de la pâte d'enveloppe 7, sans donc cuire la pâte de fond 1. Par ailleurs, les ingrédients 3 sont isolés thermiquement par la pâte d'enveloppe 7.

Il suffit de ressortir du four après cette seconde cuisson l'ensemble de pizza cuit qui se présente à la forme d'un étui, comme représenté à la figure 4.

Le produit peut alors être consommé comme un sandwich, dans un étui de protection du type papier ouvert à une extrémité, ou consommé froid ou être réchauffé ultérieurement.

Naturellement, des variantes de réalisation de l'invention peuvent être apportées.

La pâte d'enveloppe peut être solidarisée à la pâte de fond par rabattement de pliage de ses plis longitudinaux sous la pâte de fond et simple contact sur les extrémités des côtés de largeur de la pâte de fond, la cuisson rigidifiant la pâte d'enveloppe fermant l'étui de pizza obtenue.

En outre, l'invention n'est pas limitée aux pâtes à pizza mais des pâtes se rigidifiant à la cuisson peuvent également convenir ainsi que d'autres ingrédients que ceux utilisés pour la confection des pizzas.

## Revendications

1. Procédé de fabrication d'un produit alimentaire du type pizza, caractérisé en ce qu'il consiste à :
- préparer une première pâte à pizza crue (1), destinée à former le fond de pizza, de forme sensiblement rectangulaire au format du produit à obtenir ;
- disposer de façon classique sur cette pâte de fond crue les divers ingrédients (3) de pizza choisis, tels que sauce tomate, champignons et jambons.
- à cuire cette pâte (1) avec ses ingrédients (3) dans un four à pizza, sur la sole (5) et à la chaleur ambiante de ce four, de façon classique, au moins jusqu'à un point proche de la cuisson complète,
- à revêtir la pâte de fond (1) avec ses ingrédients (3) ainsi cuits d'une pâte à pizza fine crue (7) formant enveloppe et enfermant les ingrédients (3) de façon hermétique sur la pâte de fond (1) , , et solidarisée à cette pâte de fond par ses bords, et
- à mettre au four à nouveau l'ensemble obtenu de façon à cuire la pâte d'enveloppe (7).

2. Procédé de fabrication d'un produit alimentaire, du type pizza selon la revendication 1, caractérisé en ce que la pâte de fond (1), qui définit le format du produit fini, a une forme rectangulaire allongée, correspondant sensiblement à celle d'un sandwich, par exemple d'environ 8 x 25 cm.

3. Procédé de fabrication d'un produit alimentaire, du type pizza selon la revendication 1 ou 2, caractérisé en ce que le format en surface de la pâte d'enveloppe (7) est légèrement plus grand que celui de la pâte de fond (1) (sensiblement rectangulaire) pour permettre le recouvrement de cette dernière avec ses ingrédients (3) par pliage de ses bords longitudinaux et latéraux (9, 11) sous la périphérie de la pâte de fond cuite (1).

4. Procédé de fabrication d'un produit alimentaire, du type pizza selon la revendication 3, caractérisé en ce que les dimensions de la pâte d'enveloppe (7) sont d'environ 10 x 27 cm.

5. Procédé de fabrication d'un produit alimentaire du type pizza selon la revendication 1 ou 2, caractérisé en ce que la pâte d'enveloppe (7) est pliée par ses bords longitudinaux (9) sous la pâte de fond (1) et appliquée par simple contact sur les extrémités des côtés de largeur de la pâte de fond (1), la cuisson rigidifiant la pâte d'enveloppe (7) fermant l'étui de pizza ainsi obtenue.

6. Produit alimentaire obtenu par la mise en oeuvre du procédé défini selon l'une des revendications précédentes, caractérisé en ce qu'il comporte au moins une pâte de fond (1) garnie allongée et une pâte d'enveloppe (7), cuites et suffisamment rigides pour permettre la préhension et la consommation simultanées du produit comme un sandwich.

## Patentansprüche

1. Verfahren zur Herstellung eines Nahrungsmittelprodukts von der Art einer Pizza, **dadurch gekennzeichnet,** dass es aus folgenden Schritten besteht:
- Herstellen eines ersten dicken Pizzateigs (1), der zur Bildung des im wesentlichen rechteckförmigen Unterteils der Pizza in der Größe des herzustellenden Produkts bestimmt ist;
- Belegen dieses Teigbodens in herkömmlicher Weise mit den verschiedenen ausgewählten Pizzazutaten (3) wie Tomatensauce, Pilze und Schinken,
- Backen dieses Teigs (1) mit den Belagzutaten (3) in einem Pizzaofen auf dem Backblech (5) in der Raumtemperatur in diesem Ofen in üblicher Weise zumindest bis zu einem Punkt, der nahe dem Garungspunkt liegt,
- Überziehen des dicken Teigbodens (1) mit den so gebackenen Belagzutaten (3) mit einem dünnen Pizzateig (7) unter Bildung einer Umhüllung und unter dichtem Einschluss der Belagzutaten (3) auf dem Teigboden (1), wobei der dünne Teig mit dem Teigboden fest an dessen Kanten verbunden wird, und
- erneutes Einschieben des so gebildeten Verbunds in den Ofen, um die Teigumhüllung (7) zu backen.

2. Verfahren zur Herstellung eines Nahrungsmittelprodukts von der Art einer Pizza nach Anspruch 1, dadurch gekennzeichnet, dass der Teigboden (1), welcher die Größe des fertigen Produkts festlegt, eine langgestreckte rechteckige Form aufweist, welche im wesentlichen der Form eines Sandwich bzw. belegten Brotes entspricht und beispielsweise etwa 8 x 25 cm misst.

3. Verfahren zur Herstellung eines Nahrungsmittelprodukts von der Art einer Pizza nach Anspruch 1 oder 2, dadurch gekennzeichnet, dass die Größe auf der Oberfläche der Teigumhüllung (7) etwas größer als die des Teigbodens (1) ist (im wesentlichen rechteckförmig), damit der Teigboden mit den Belagzutaten (3) durch Umschlagen der Längs- und Querränder (9, 11) unter den Umfang des gebackenen Teigbodens (1) umhüllt werden kann.

4. Verfahren zur Herstellung eines Nahrungsmittelprodukts von der Art einer Pizza nach Anspruch 3, dadurch gekennzeichnet, dass die Abmessungen der Teigumhüllung (7) in etwa 10 x 27 cm betragen.

5. Verfahren zur Herstellung eines Nahrungsmittelprodukts von der Art einer Pizza nach Anspruch 1 oder 2, dadurch gekennzeichnet, dass die Teigumhüllung (7) an ihren Längskanten (9) unter den Teigboden (1) umgeschlagen und durch einfachen Kontakt auf den Enden der Breitseiten des Teigbodens (1) angedrückt wird, wobei der Backvorgang die Teigumhüllung (7) unter Verschließen der so erhaltenen Pizzahülle versteift.

6. Unter Durchführung des Verfahrens nach einem der vorhergehenden Ansprüche hergestelltes Nahrungsmittelprodukt, dadurch gekennzeichnet, dass es mindestens einen langgestreckten belegten Teigboden (1) und eine Teigumhüllung (7) aufweist, die gebacken und ausreichend starr sind, damit beide Teile zusammen gleichzeitig erfasst und wie ein Sandwich bzw. ein belegtes Brot verzehrt werden können.

## Claims

1. A method of making a food product of the pizza type, characterised in that it comprises:
- preparing a first raw pizza dough (1) intended to form the pizza base, of substantially rectangular shape in the form and size of the product to be obtained;
- placing in conventional manner on said raw dough base the various pizza ingredients (3) chosen, such as tomato sauce, mushrooms and hams,
- cooking this dough (1) with its ingredients (3) in a pizza oven, on a hearth plate (5) and at the ambient temperature of said oven, in conventional manner, at least until a point close to complete cooking,
- covering the dough base (1) and its ingredients (3) thus cooked with a fine raw pizza dough (7) to form an envelope and enclose the ingredients (3) in a sealed manner on the dough base (1), and which is joined to said dough base by its edges, and
- placing the resultant assembly again in the oven so as to cook the dough envelope (7).

2. A method of making a food product of the pizza type according to Claim 1, characterised in that the dough base (1), which defines the form and size of the end product, is of elongate rectangular shape corresponding substantially to that of a sandwich, for example approximately 8 x 25 cm.

3. A method of making a food product of the pizza type according to Claim 1 or 2, characterised in that the surface form and size of the dough envelope (7) is slightly larger than that of the dough base (1) (substantially rectangular) so as to enable the latter and its ingredients (3) to be covered by folding its longitudinal and lateral edges (9,11) under the periphery of the cooked dough base (1).

4. A method of making a food product of the pizza type according to Claim 3, characterised in that the dimensions of the dough envelope (7) are approximately 10 x 27 cm.

5. A method of making a food product of the pizza type according to Claim 1 or 2, characterised in that the dough envelope (7) is folded at its longitudinal edges (9) under the dough base (1) and applied by simple contact on to the ends of the width sides of the dough base (1), the cooking process imparting rigidity to the dough envelope (7) closing the pizza casing thus obtained.

6. A food product obtained by carrying out the method defined according to any one of the preceding Claims, characterised in that it comprises at least one elongate garnished dough base (1) and a dough envelope (7), which are cooked and sufficiently rigid to enable the product to be simultaneously gripped and consumed like a sandwich.
